# NOUVEAU FASCICULE DE BREVET EUROPEEN

(11) **EP 2 054 357 B2**
(45) Date de publication et mention de la décision concernant l'opposition: **15.11.2023**
(45) Mention de la délivrance du brevet: 27.03.2019
(21) Numéro de dépôt: 07823359.0
(22) Date de dépôt: 27.07.2007
(51) Int. Cl.: C05F 11/08, A01C 1/06

(54) **METHODE POUR AMELIORER LA PRODUCTION DE BIOMASSES DE CULTURES CEREALES**
VERFAHREN ZUR VERBESSERUNG DER HERSTELLUNG VON BIOMASSEN AUS GETREIDEKULTUREN
METHOD FOR IMPROVING PRODUCTION OF BIOMASSES OF CEREAL CROPS

(30) Priorité: 31.07.2006 FR 0607000
(43) Date de publication de la demande: 06.05.2009
(73) Titulaire: Danstar Ferment AG, 6300 Zug (CH)
(72) Inventeur: SANCHEZ, Jean-Marc, 31700 DAUX (FR)
(74) Mandataire: J A Kemp LLP
(86) Numéro de dépôt international: PCT/FR2007/001302
(87) Numéro de publication internationale: WO 2008/017751

(56) Documents cités:
- EP-A2- 1 965 649
- WO-A1-2005/104854
- WO-A1-2006/049201
- WO-A1-2006/059683
- FR-A1- 2 873 688
- US-A1- 2002 121 046
- US-A1- 2003 022 357
- US-A1- 2006 110 402
- US-B1- 7 074 251
- 'Uber die Förderung der Pflanzenentwicklung durch Hefeauszüge' 1943, vol.25 pages 378-390
- Yeast Technology, Reed & Nagodawithana. 1991
- Use of Yeast Biomass in Food Production, Halásy & Lásztity.1991
- Lallemand « Les multiples facettes des produits dérivés de levure pour la vinification »
- « Vitammes et autres facteurs nécessaires a la fermentation alcoolique»
- 'Levures actives ou inactives'
- Lesaffre Yeast 'The advantages of deactivated yeast
- BAKERpedia 'Inactivated yeast'
- J Hansen et al (2021) Aquaculture 530, 735707, pages 1 -10

## Description

L'invention a pour objet une méthode pour améliorer la production de biomasses de cultures de céréales.

L'évolution des modes de production agricoles amène à rechercher des solutions pour optimiser l'apport d'engrais en fonction des besoins de la plante. Dans ce contexte, les nouvelles méthodes de culture et les produits développés visent à mieux valoriser les nutriments déjà présents dans les sols, ou ceux qui y sont apportés par la fertilisation, notamment en favorisant l'activité microbienne et biologique des sols.

Les produits les plus généralement utilisés pour augmenter l'activité des micro-organismes du sol comprennent:
- des engrais minéraux ou organiques (composts, fumiers, produits industriels) qui permettent, dans une certaine mesure, de dynamiser la vie microbienne du sol. Mais cette utilisation ne correspond pas à leur vocation principale qui reste la nutrition de la plante. Ainsi, ils constituent avant tout des supports nutritionnels pour la plante et dans une certaine mesure pour les micro-organismes.
- des inocula de micro-organismes appliqués au sol ou dans la rhizosphère, comme des Bacillus, qui sont employés comme "probiotiques" du sol, ou des micro-organismes dont les propriétés sont jugées favorables pour la plante (lutte contre les maladies en détruisant ou réduisant la capacité de nuisance des pathogènes, en favorisant le développement racinaire par la sécrétion de facteurs de croissance de type hormone végétale,...).
- des inocula de micro-organismes symbiotiques comme les bactéries Rhizobium, qui forment des nodosités avec les racines des légumineuses pour capter l'azote atmosphérique ou, récemment, les mycorhizes (champignons microscopiques qui vivent en symbiose avec les plantes), qui s'associent dans le sol aux racines des plantes et développent des filaments mycéliens explorant le sol et transférant à la plante des minéraux et de l'eau.

Beaucoup de micro-organismes vivant dans la zone proche des racines (rhizosphère) sont aujourd'hui reconnus pour avoir des effets bénéfiques sur la croissance des plantes. Des bactéries (Bacillus Subtilis, Frankia,...) vivent grâce aux exsudats racinaires des plantes et stimulent la croissance des plantes (Plant Growth Promoting Rhizobacteria). Il existe aujourd'hui des produits commerciaux consistant à localiser ces micro-organismes dans la rhizosphère et autour de la semence. L'adjonction de micro-organismes vivants autour de la semence permet à la fois de localiser l'apport (optimisation des doses) et d'en améliorer l'efficacité (ex : Enrobages de semence proposés à base de mycorhize, Bacillus Subtilis).

Il a été démontré que des levures actives pouvaient avoir des effets bénéfiques sur la croissance des plantes après application foliaire. Des apports de levures actives ou dérivés (inactives, extraits, lies), seuls ou en mélange semblent parfois avoir aussi des effets bénéfiques sur la plante. Certaines souches de levure ont été testées comme antagonistes de maladies de plante (ex : Cryptoccus Nodaenis permet de lutter contre le fusarium du blé). Cependant l'utilisation de levures en tant que fertilisants des sols agricoles ou en tant que produits phytopharmaceutiques reste peu répandue.

L'application de levures actives et dérivés en traitement de sol (apport non localisé) a été testée à des quantités permettant de conclure à un effet bénéfique essentiellement grâce à un apport de nutriments (azote organique, acides aminés, minéraux chélatés,...).

US2003/022357 décrit des engrais biologiques comprenant des levures et un substrat organique comme des boues.

L'inventeur a cherché à améliorer l'apport et l'utilisation de levures inactives, écorces, ou extrait de levures pour améliorer la production de biomasse des cultures non légumineuses. Par "levures inactives", on entend, dans la description et les revendications, aussi bien les levures inactives que les dérivés de levure, notamment les extraits de levure ou les écorces de levure.

Des expérimentations visant à diminuer la dose par hectare avaient été effectuées par ses soins pour rendre le produit avantageux économiquement. Lors d'apport au sol non localisé à différentes doses, une efficacité intéressante à quelques kilogrammes a été observée en comparaison à plusieurs centaines de kg par hectare.

Par la suite, l'inventeur a voulu tester un apport en enrobage de semence à une dose faible de 1 à 5 kg par hectare, l'effet nutritif des composés du produit ne pouvait pas avoir un effet important étant donné les quantités par hectare. Une amélioration surprenante et significative a alors été observée.

L'invention a donc pour but de fournir une nouvelle méthode pour améliorer la production de biomasses de céréales.

Egalement décrites sont les semences enrobées obtenues par cette méthode.

La méthode selon l'invention pour améliorer la production de biomasses de cultures de céréales est caractérisée en ce qu'elle comprend l'application autour de la semence de levures inactives seules ou de levures inactives et de dérivés de levure seuls, notamment d'extraits de levure ou d'écorces de levure, pour enrober les semerces avec lesdites levures inactives ou lesdites levures inactives et dérivés de levures. Avantageusement, ces différents composés sont utilisés seuls, c'est-à-dire sans autre ajout de principes actifs ou constituant l'essentiel du principe actif si d'autres composés sont utilisés.

Comme illustré par les exemples, l'apport de levures inactivées seules et/ou de dérivés de levure seuls autour de la semence à des doses peu élevées permet de manière inattendue une amélioration des rendements sur céréales.

Les levures utilisées sont inactivées thermiquement ou tout autre procédé physique, chimique, physicochimique ou enzymatique.

Elles sont avantageusement produites à partir de souches du genre Saccharomyces.

L'application des levures ou des dérivés de levure sur les semences est avantageusement réalisée par brassage des levures ou des dérivés avec les semences. Les levures ou les dérivés sont utilisés plus particulièrement sous forme pulvérulente. De préférence, les semences sont humectées avant l'application des levures, plus particulièrement avec de l'eau.

Les levures ou les dérivés de levure sont de préférence appliqués à raison de 0,5 à 10 kg de matière sèche par hectare autour de la semence, de préférence de 1 à 5 kg de matière sèche/hectare.

Décrits vise également, en tant que produits, sont les semences enrobées de levures inactives seules et/ou de dérivés de levure seuls comme défini ci-dessus, pour son utilisation dans l'amélioration de la production de biomasses de cultures de non légumineuses, dans lesquelles la dose de levures inactives et/ou de dérivés de levure est de 0,5 à 10 kg de matière sèche par hectare .

D'autres caractéristiques et avantages de l'invention sont donnés dans la suite de la description à titre purement illustratif.

### 1- Effet d'apport de levures inactivées autour de la semence sur blé.

Expérimentations conduites en plein champ sur micro-parcelle de blé dans le département de la Vienne (France).

Variété de blé tendre.
Date de semis : 12/10/2005
Deux Modalités : témoin sans Levures/Modalité avec Levure Les levures ont été appliquées à la dose de 1 kg de matière sèche par hectare autour de la semence de la manière suivante :
   Les graines sont brassées avec le produit qui se trouve sous forme de poudre. Ces semences avaient été humectées auparavant avec de l'eau, par exemple à 1% d'eau pour permettre une meilleure adhésion. Les semences témoins ont aussi été humectées dans les mêmes conditions.

6 répétitions sont effectuées pour permettre une analyse statistique.

Le rendement grain a été mesuré, les résultats sont présentés dans le tableau suivant :
Rendement par hectare du blé avec ou sans un enrobage de la semence à partir de levures inactivées

| | Rendement en Quintaux par hectare |
|---|---|
| Sans Levure | 64 |
| Avec Levure | 69,7 |

Soit un gain de +5,7 Quintaux.
Cet essai est significatif (ETR 1,5 Qx ; CV : 1,2%)

### 2- Effet d'apport de levures inactivées autour de la semence sur Ray-Grass (Exemple de Réference)

Les semences de Ray-Gras sont semées le 6 avril 2006 dans des pots plastiques remplis de terreau horticole universel à raison de 3g de semence par pot. Deux modalités sont testées : avec ou sans enrobage de la semence avec des levures. L'expérimentation est effectuée avec 10 répétitions pour permettre une analyse statistique.

De la même façon que précédemment les semences traitées sont humectées auparavant pour permettre une bonne adhésion des levures. Les semences témoins sont humectées d'eau seule. La dose de levure est de 0,01 g de matière sèche pour un pot. Chaque pot a une surface de 0,1 m2. Cette dose équivaut donc à 1 kg de matière sèche/hectare.

Les résultats mesurés sont présentés sur le tableau suivant :

| | Pesée en grammes (5/05/06) | Mesures Hauteur Moyenne en cm (20/06/06) |
|---|---|---|
| Sans levures | 21,31 | 6,44 |
| Avec Levures | 16,86 | 5,37 |

| | | |
|---|---|---|
| P < 0,01 | | |

## Revendications

1. Méthode pour améliorer la production de biomasses de cultures de céréales, **caractérisée en ce qu'**elle comprend l'application autour des semences de levures inactives seules ou de levures inactives et de dérivés de levure seuls utilisés à titre de principe actif ou comme constituant essentiel de principe actif, pour enrober les semences avec lesdites levures inactives ou lesdites levures inactives et dérivés de levure.

2. Méthode selon la revendication 1, **caractérisée en ce que** les levures sont inactivées thermiquement ou par tout autre procédé physique, chimique, physicochimique, ou enzymatique.

3. Méthode selon la revendication 1 ou 2, **caractérisée en ce que** les levures sont du genre *Saccharomyces.*

4. Méthode selon l'une quelconque des revendications 1 à 3, **caractérisée en ce que** les semences sont brassées avec les levures.

5. Méthode selon la revendication 4, **caractérisée en ce que** les levures ou les dérivés de levure sont sous forme pulvérulente.

6. Méthode selon l'une quelconque des revendications 1 à 5, **caractérisée en ce que** les semences sont humectées avant l'application des levures ou des levures et des dérivés de levure.

7. Méthode selon l'une quelconque des revendications 1 à 6, **caractérisée en ce que** les semences enrobées de levures ou de levures et de dérivés de levures sont appliqués à raison de 1 à 5 kg de matière sèche par hectare.

## Patentansprüche

1. Verfahren zur Verbesserung der Herstellung von Biomassen aus Getreiden, **dadurch gekennzeichnet, dass** es das Aufbringen von nur inaktiven Hefen oder von nur inaktiven Hefen und Derivaten inaktiver Hefen, welche als Wirkstoff oder als wesentlicher Bestandteil des Wirkstoffs verwendet werden, auf Saatgut umfasst, um das Saatgut mit besagten inaktiven Hefen oder besagten inaktiven Hefen und Derivaten inaktiver Hefen zu umhüllen.

2. Verfahren nach Anspruch 1, **dadurch gekennzeichnet, dass** die Hefen thermisch oder durch jedes andere physikalische, chemische, physikochemische oder enzymatische Verfahren inaktiviert warden.

3. Verfahren nach Anspruch 1 oder 2, **dadurch gekennzeichnet, dass** es sich um Hefen der Gattung *Saccharomyces* handelt.

4. Verfahren nach einem der Ansprüche 1 bis 3, **dadurch gekennzeichnet, dass** das Saatgut mit den Hefen umgewälzt wird.

5. Verfahren nach Anspruch 4, **dadurch gekennzeichnet, dass** die Hefen oder die Hefe-Derivate in Pulverform vorliegen.

6. Verfahren nach einem der Ansprüche 1 bis 5, **dadurch gekennzeichnet, dass** das Saatgut vor dem Aufbringen der Hefen oder der Hefen und der Hefe-Derivate befeuchtet wird.

7. Verfahren nach einem der Ansprüche 1 bis 6, **dadurch gekennzeichnet, dass** das mit Hefen oder Hefen und Hefe-Derivaten umhüllte Saatgut in einer Menge von 1 bis 5 kg Trockenmasse pro Hektar angewandt wird.

## Claims

1. Method for improving the production of biomasses of cereals, **characterized in that** it comprises the application around the seeds of inactive yeasts alone or of inactive yeasts and yeast derivatives alone, used as active ingredient or as essential constituent of active ingredient, to coat the seeds with said inactive yeasts or said inactive yeasts and yeast derivatives.

2. Method according to claim 1, **characterized in that** the yeasts are inactivated thermally or by any other physical, chemical, physicochemical or enzymatic process.

3. Method according to claim 1 or 2, **characterized in that** the yeasts are of the genus *Saccharomyces.*

4. Method according to any one of claims 1 to 3, **characterized in that** the seeds are brewed with the yeasts.

5. Method according to claim 4, **characterized in that** the yeasts or yeast derivatives are in powdery form.

6. Method according to any one of claims 1 to 5, **characterized in that** the seeds are moistened before the application of the yeasts or of the yeasts and yeast derivatives.

7. Method according to any one of claims 1 to 6, **characterized in that** the seeds coated with yeasts or yeasts and yeast derivatives are applied at a rate of 1 to 5 kg of dry matter per hectare.
